(19) Europäisches Patentamt
European Patent Office
Office européen des brevets

(11) **EP 4 415 218 B1**

(12) **EUROPEAN PATENT SPECIFICATION**

(45) Date of publication and mention
of the grant of the patent:
**22.07.2026 Bulletin 2026/30**

(21) Application number: **23155392.6**

(22) Date of filing: **07.02.2023**

(51) International Patent Classification (IPC):
$H02J\ 7/02^{(2016.01)}$ $H02J\ 50/00^{(2016.01)}$
$H02J\ 50/40^{(2016.01)}$ $H02J\ 50/10^{(2016.01)}$

(52) Cooperative Patent Classification (CPC):
**H02J 50/402; H02J 7/02; H02J 50/005; H02J 50/10**

(54) **RECEIVER MODULE FOR WIRELESS POWER TRANSMISSION AND MOBILE DEVICE WITH A RESPECTIVE RECEIVER MODULE**

EMPFANGSMODUL ZUR DRAHTLOSEN STROMÜBERTRAGUNG UND MOBILE VORRICHTUNG MIT EINEM ENTSPRECHENDEN EMPFANGSMODUL

MODULE RÉCEPTEUR POUR TRANSMISSION D'ÉNERGIE SANS FIL ET DISPOSITIF MOBILE AVEC UN MODULE RÉCEPTEUR RESPECTIF

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**14.08.2024 Bulletin 2024/33**

(73) Proprietor: **PULS GmbH**
**81925 München (DE)**

(72) Inventors:
• **Springett, Nigel**
**79312 Emmendingen (DE)**
• **Maares, Matthias**
**79312 Emmendingen (DE)**
• **Leypold, Daniel**
**79114 Freiburg (DE)**

(74) Representative: **Hofstetter, Schurack & Partner Patent- und Rechtsanwaltskanzlei PartG mbB**
**Balanstraße 73 / Haus 31A**
**81541 München (DE)**

(56) References cited:
WO-A1-2022/097050  CN-A- 109 687 601
US-A- 3 886 398  US-A1- 2010 090 649

## Description

The disclosure is concerned with a receiver module for wireless power transmission, in particular inductive wireless power transmission. The disclosure is also concerned with a mobile device with a respective receiver module.

Wireless (inductive) power transmission systems have huge advantages over cable-connected systems. Due to technological advancements, such transmission systems gain more and more attention. For example, the transmission system can be used for wireless charging of mobile batteries.

WO 2022/097050 A1 discloses an inductive power transfer receiver comprising: a receiving coil, a tuned circuit comprising the receiving coil, and a transformer sub-circuit connected to the tuned circuit, the transformer sub-circuit comprising a transformer primary side and a transformer secondary side, wherein in use, the transformer sub-circuit reduces current in the receiving coil, improves power factor, and/or improves stability in the tuned circuit.

US 2010/0090649 A1 discloses an energy storage device with an assembly of energy storage cells connected in series. A balacing circuit is configured to enable energy to be drawn from at least one of the cells and to be distributed to at least one other of said cells. The balancing circuit comprises a transformer of the flyback type equipped with a core, a primary inductance winding and secondary windings, each connected to one of the cells. A bypass capacitor is mounted in parallel with the primary winding and to a switch.

Moreover, CN 109 687 601 A discloses a wireless charging transmitting circuit and a wireless charging receiving circuit.

In general, inductive power transmission systems may include a stationary and a mobile side. The stationary side (immobile side) may form a power transmitter, thus providing or supplying electric power or energy. The power transmission may be achieved by means of time varying magnetic fields. Therefore, the stationary side can have a switched mode electronic circuit and a resonance circuit comprising one or more capacitors and transmission coil.

In comparison, the mobile side (movable with respect to the stationary side, e.g. based in a vehicle or a robotic system) may comprise a receiver to the transmitted power for energy. Receiving means that the transmitted time varying magnetic field can induce a voltage and current in a receiving coil of the mobile side and a belonging resonance circuit. A passive or an active rectifier of the mobile side can feed the received electric energy directly into a battery or a mobile energy system. The mobile energy system may comprise one or several energy storage devices or loads, e.g. a DC-DC-converter (DC: direct current), a battery a supercap, an ultracap and/or other well-known devices capable of energy storing.

With increasing power demand for the transmission, for example in the range of 5 kilowatt to 10 megawatt and the voltage for the energy storage device usually fixed (typically 48 Volts nominal or 60 Volts maximum for a battery), the charging current on the mobile side needs to increase. However, with increasing charging current, a receiver coil design gets more complex and expensive. Up to date, it is difficult or even impossible to build a receiver coil for currents above 100 Ampere.

A less demanding receiver module design can be to implement a transformer between the receiver coil and the rectifier. Thus, the voltage of the receiver coil can be higher and the current lower. This can be further improved by having several transformers and rectifiers connect in series on the primary side connected to the receiver coil and in parallel or in series (or a combination thereof) on the secondary side connected to the rectifier. With this configuration, it is possible to address different voltage ranges, e.g. from 30 Volt to 60 Volt.

One of the challenges of this design is balancing the receiver modules' output voltages, especially at high loads. Here, output voltage means battery voltage, i.e. the voltage that is provided to the energy storage device. Those voltage imbalances result from an inherent couple capacitance or coupling capacitance of each transformer between its primary and secondary coil. In the serial connection of the transformers, a voltage across each of the couple capacitances to a base potential, for example chassis ground will be different. This means different currents flow through the transformers, which creates different output voltages and creates a problem balancing the output voltages of the transformers.

A known solution for balancing is to include resistors in each module. Thus, if the voltage rises across each transformer, more current is drawn. However, this solution increases the stand-by load current of the receiver module.

It is an object of the present disclosure to provide a solution for low loss balancing of output voltages of a receiver module, which is used in wireless power transmission.

The object is accomplished by the subject-matter of the independent claims. Advantageous developments with convenient and non-trivial further embodiments of the disclosure are specified in the following description, the dependent claims and the figures.

According to one aspect, the disclosure or invention proposes a receiver module for wireless (inductive) power transmission comprising a receiver coil for generating a power transmission signal from an alternating or time-varying magnetic field. The magnetic field may be provided by a transmitter module, such as the stationary side of the power transmission system mentioned above.

In addition, the receiver module comprises at least three transformer circuits. Here, at least three means three or more, such as four or five or six or more transformer circuits. The transformer circuits are enabled to receive the power transmission signal from the receiver coil at a primary side of the respective transformer circuit. In addition, the transformer circuits are enabled to transform the power transmission signal into a supply (power) signal or charging signal, and for providing the supply signal at a secondary side of the respective transformer circuit for supplying a connectable energy storage device. Thus, the transformer circuits are used for power conversion or power transformation between the receiver coil and an output of the receiver module, which provides a connection for the energy storage device.

The power transmission signal may be an alternating or time varying electrical signal or AC-signal (alternating current) which may be induced into the receiver coil according to the principle of induction. The power transmission signal may provide a voltage value in the range of 100 V to 5000 V. A typical value can be 400 V peak to peak, thus +/-200 V. In comparison, the supply signal may be a DC-signal or direct current signal. The supply signal may provide a voltage value in the range of 10 V to 800V as required by the used energy storage device. Typical values for the supply signal may be 12 V, 48 V or 80 V. The transformer circuit may be enabled to realize down transformation of the voltage provided by a power transmission signal to the supply signal. Thus, the voltage at the receiver coil can be higher and the current at the receiver coil can be lower than on the secondary side. To do so, each transformer circuit may comprise at least one transformer, at least one rectifier and at least one filter capacitor. By incorporating the transformer, the transformer circuits provide galvanic insulation of the primary and secondary side. Such a transformer circuit design for signal transformation is well-known.

Primary side and secondary side are well-known terms for distinguishing two galvanically isolated sides or parts of a transformer. Here and in the following, the term or prefix "primary" means belonging to the primary side. Analogously, the term or prefix "secondary" means belonging to the secondary side. Within the transformer circuit, the rectifier and filter capacitor may be arranged on the secondary side, while the receiver coil may be arranged on the primary side.

By supplying the energy storage device with the supply (power) signal, the energy storage device can be powered with electric power or energy. Thus, the energy storage device can be charged. The energy storage device may be a device for operation with a DC-signal (direct current), here the supply signal. Thus, the transformer circuit may provide an AC-DC signal transformation. The energy storage device may provide or act as a DC-load with energy storing and supplying properties for the receiver module. Examples for an energy storage device are a battery, an accumulator or capacitance, such as a so-called supercaps or ultracaps.

In the receiver module the at least three transformer circuits are connected in a serial connection on the primary side. That means, the transformer circuits are connected in series. Thus, the power transmission signal can be tapped or measured via the serial connection. In the serial connection, a first of the transformer circuits is directly connected with a first connection or connection A of the receiver coil. A last of the transformer circuits is directly connected with a second connection or connection B of the receiver coil. The remaining transformer circuit(s) is (are) connected between the first and last transformer circuit.

On the secondary side, the respective transformer circuits are each coupled with a first output connection and a second output connection for the energy storage device. The second output connection is coupled with a base potential of the receiver module. The connection may be provided by means of a secondary-side Y-capacitor. A Y-capacitor is a standard capacitor classified according to safety capacitor classifications. A Y-capacitor is also known as line-to-ground or line bypass capacitor. A Y-capacitor is typically used to prevent or suppress electromagnet interferences due to common load interferences.

The respective first and second output connection may form an output terminal for each of the transformer circuits. By electrically connecting the output terminals to each other, a supply terminal for connecting the energy storage device can be formed. The supply terminal may comprise a first supply connection and a secondary supply connection. The first and second supply connections may provide a first secondary side reference potential and a second secondary side reference potential of the secondary side.

For voltage balancing, the receiver module also comprises at least two bypass devices comprising at least one bypass capacitor. On the primary side, at least the first and the last of the transformer circuits are each connected in parallel to one of the bypass devices. Thus, at least one of the transformer circuits is not associated or connected with a respective bypass device in parallel. In particular, for an uneven number of transformer circuits, the transformer circuit in the middle of the serial connection is not connected with a respective bypass device in parallel. For an even number of transformer circuits, the two transformer circuits in the middle are not connected with the respective bypass device in parallel. However, due to the serial connection of the transformer circuits to each other, the parallel bypass device of the neighboring transformer circuit is connected in series to the bypass device-free transformer circuit.

The respective connection of the bypass devices to the transformer circuits allows for providing a raised or increased electric potential at a respective center tap between two directly connected transformer circuits on the primary side. Thus, an electrical load, such as a current or voltage across each transformer circuit, which results due to the inherent couple capacitance of the transformer, may be balanced out or at least more balanced than without the bypass devices. In particular, a slope or edge of the currents flowing across each transformer and thus the current rises are adjusted to each other. Therefore, the output voltage provided by each transformer circuit of the serial connection on the secondary side is approximated or equalized to each other and thus balanced. The output voltages of all transformer circuits, which form the supply signal, are as uniform or balanced as possible.

The disclosure also comprises embodiments that provide features that afford additional technical advantages.

In one embodiment, the respective transformer circuits are connected in serial connection on the secondary side. In other words, the output terminals (first output connection, second output connection) of the transformer circuits may be connected in series to form the supply terminal for the energy storage device. Thus, the voltage value for the supply signal results from the sum of the individual voltages provided by the respective transformer circuit at the corresponding output terminal. Alternatively, a parallel connection or a combination of parallel and serial connection on the secondary side is possible as well. The chosen type of connection may depend on the desired voltage output of the receiver module.

In one embodiment, the respective transformer circuits are configured as receiver circuits, in particular as full-wave rectifier circuits, especially as bridge rectifier circuits. A rectifier circuit is a well-known electrical component for transforming an electrical AC-signal, such as the power transmission signal into an electrical DC-signal, such as the supply signal. For rectifying or converting the AC-signal into the DC-signal, the rectifier circuit may comprise a bridge rectifier, e.g. with diodes or transistors as rectifying elements. The rectifying elements may be connected in a so-called B2 configuration (e.g. two pairs of diodes or transistors connected in parallel) for providing a full-wave rectifier. Another type of possible rectifier circuit can be a rectifier using a center tab. In addition, the rectifier circuit can comprise a smoothing circuit. A smoothing circuit is well-known electrical component to smooth the output signal of a rectifier. The smoothing circuit may comprise a smoothing capacitor or a filter capacitor to do so.

In one embodiment, each of the transformer circuits comprises a planar transformer. A planar transformer is a well-known design or structure for a transformer. In a planar transformer, an electrical inductor or coil may be provided as a one-dimensional winding. Thus, the material thickness of the coil may be in the range of several micrometer or a few millimeters at maximum. This results in a plane or flat design and brings the advantage of a low leakage inductance compared to conventional coils used in transformers.

In one embodiment, the receiver module comprises at least five transformer circuits, thus five or more transformer circuits. The at least five transformer circuits are connected in serial connection between the respective first and second connection of the receiver coil on the primary side, resulting in a center transformer circuit in a middle position of the serial connection and four outer transformer circuits. On secondary side, the connection may be realized as described above. In the serial connection on the primary side, at least the four outer transformer circuits are each connected in parallel with a respective bypass device. With this configuration of transformer circuits with parallel bypass devices the output voltages of all transformer circuits can be as uniform or balanced as possible.

Herewith, outer transformer circuit means those transformers which are connected closest to the first and second connection of the receiver coil. The opposite of an outer transformer circuit may be an inner transformer circuit.. For an odd number of transformer circuits, there may be one inner transformer circuit. An even number of transformer circuits may provide two inner transformer circuits.

The number of used transformer circuits in the receiver module may depend on the value of the power or energy to be transmitted between the transmitter and the receiver module as well as the value of the supply power or energy required by the energy storage device.

In one embodiment, the value or the dimensioning of the capacitance of the bypass capacitor of the bypass device is dependent on a position of the associated transformer circuit in the serial connection relative to the first and second connection of the receiver coil. Thus, the value can be dependent on how much voltage needs to be balanced between each of the transformer circuits.

For example, the values of the bypass capacitors may increase with approximation to the connection point. In other words, the values may reduce the further away the considered transformer circuit is away from the connection point, thus, the first or second connection, or the number of transformer circuits connected between the connection point and the considered transformer circuit.

In one embodiment, in the serial connection of the transformer circuit a center tab between the transformer circuits is provided. The center tab is coupled with the aforementioned base potential of the receiver module. The base potential may be provided by a chassis or chassis ground or another reference potential, which may provide a base or ground for the electrical signals in the receiver module. The connection to the base potential may be provided by means of a primary side Y-capacitor. The Y-capacitor, as described above, is connected in series with the serial connection of the transformer circuits. Thus, the Y-capacitor may connect the serial connection with the base potential. The concept of providing a center tab with a Y-capacitor to connect the base potential may be beneficial for electromagnet compatibility (INC) of the receiver module. In particular, this configuration may provide interference resistance and emission resistance for measurements circuits.

A value or a dimension of the capacitance of the bypass capacitor of the bypass device is provided as a function of a couple capacitance of the respective transformer circuit, in particular a transformer of the respective transformer circuit, especially a primary-side coil and secondary-side coil of transformer. The capacitance of each bypass capacitor and the couple capacitance may be in the same range of values, depending on the distance from the connection point with the receiver coil.

Analogously, the capacitances of the primary and secondary side Y-capacitors may be in the same range of values. Preferably, the capacitance of the bypass capacitor is much smaller than capacitance of a Y-capacitor. For example, they can differ in the range of one to two orders of magnitude. Preferably, the capacitance of a Y-capacitor is much smaller than the capacitance of a smoothing circuit as mentioned above. The difference may be, for example, in the range of four to five orders of magnitude. Typical values for a filter capacitance may lie in the range of 10s of $\mu$F (microfarad), wherein typical values for the Y-capacitor may lie in the range of several nF (nanofarad).

In an embodiment, the bypass capacitor providing a capacitance of several nanofarad, in particular 1 to 20 nanofarad, preferably 1 to 4 nanofarad. Analogously, the inductance of the respective transformer circuits, in particular the inductance of the respective transformer may be in the range of several microhenry ($\mu$H). To avoid interfering references in the power transmission, a typical transmission frequency of the power transmission signal may be in the range of several ten to several hundred kilohertz (kHz). Typical values may be between 20 to 150 kilohertz.

In another aspect, the disclosure is concerned with a mobile device with a receiver module as described above. The mobile device also provides an energy storage device, which is connected with the receiver module. The connection is provided with a connector or terminal.

The mobile device may be a vehicle, a robot or a smartphone. A vehicle may preferably be a transport vehicle, especially an electric transport vehicle. Here within mobile means that the mobile device can move freely or independently from a stationary power supply, such as the above-mentioned stationary side. Thus, the mobile device is non-stationary by transporting its own energy storage device as its own power supply. The recharging of the power supply may be provided by the stationary power supply. Preferably the mobile device is an autonomous vehicle.

In the following an exemplary implementation of the invention is described. The figures show:

Fig. 1    a schematic illustration of an exemplary embodiment of a contactless inductive wireless battery charging system for autonomous transport vehicles, and

Fig. 2    a schematic illustration of an exemplary embodiment of a receiver module for the autonomous transport vehicle.

The embodiment explained in the following is a preferred embodiment of the invention. However, in the embodiment, the described components of the embodiment each represent individual features of the invention which are to be considered independently of each other and which each develop the invention also independently of each other and thereby are also to be regarded as a component of the invention in individual manner or in another than the shown combination. Furthermore, the described embodiment can also be supplemented by further features of the invention already described.

In the figures identical reference signs indicate elements that provide the same function.

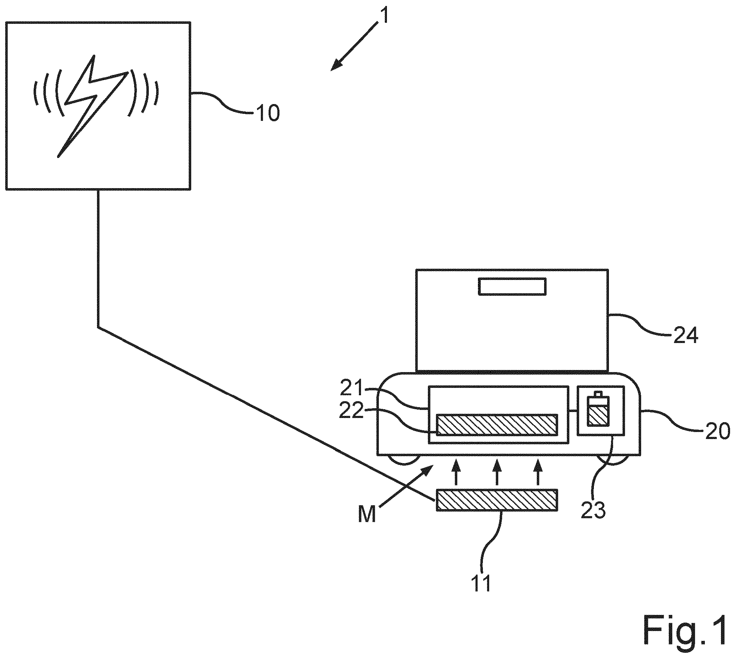

Fig. 1 shows a schematic illustration of an exemplary embodiment of a wireless power transmission system 1 for an autonomous transport vehicle. The system 1 comprises a charging station 10 and a transport robot 20. Here, the transport robot 20 is an example for an autonomous transport vehicle. Another example may be an industrial truck or other known autonomously guided vehicles.

The system 1 may be enabled for wireless power transmission, in particular contactless via inductive energy transfer between the charging station 10 and the transport robot 20.

The charging station 10 is stationary or immobile. That means that the charging station 10 may be an integral part or constituent of an environment, such as an industrial environment. Therefore, the charging station 10 may also be referred to as stationary device or stationary side. The charging station 10 may be a power source or energy source for the transport robot 20. For this purpose, the charging station 10 may comprise a transmitter module with a transmitter coil 11. For the inductive power transmission, the transmitter coil 11 may be enabled to provide a time varying magnetic field M.

In addition to the transmitter coil 11, the transmitter module of the charging station 10 may also comprise a switch mode electronic circuit and a resonance circuit consisting of capacitors and the transmitter coil 11 (not depicted in Fig. 1).

To facilitate wireless power transmission, the transmitter coil 11 may be installed or integrated in a floor or ground of the industrial environment. Thus, the power transmission or charging can be initialized, when the transport robot 20 is positioned (directly) above the transmitter coil 11, as shown in Fig. 1.

In comparison to the charging station 10, the transport robot 20 is mobile or movable. The transport robot 20 can be an autonomous transport vehicle or an autonomously guided vehicle. Therefore, the transport robot 20 can also be referred to as mobile device. As the name implies, the transport robot 20 is enabled to transport transported goods 24 through the industrial environment. Transported goods 24 may be, for example, components or parts, for example, for building a vehicle or merchandise.

To ensure non-restricted mobility of the transport robot 20, the transport robot 20 comprises an energy storage device. In Fig. 1, the energy storage device may be an accumulator or a battery 23. The battery 23 may be a lithium-based battery.

For charging the battery 23, the transport robot 20 can receive the transmitted magnetic field M from the charging station 10. For this purpose, the transport robot 20 comprises a receiver module 21 with a receiver coil 22. The receiver module 21 is electrically connected to the battery 23.

Fig. 1 shows the charging system 1 in a charging state. In the charging state, the power transmission between charging station 10 and transport robot 20 may be executed. Therefore, the transport robot 20, in particular the receiver coil 22 is positioned or placed directly above the transmitter coil 11. The charging process can begin. For optimized inductive wireless charging of the battery 23, in particular lithium-based batteries, communication with the transport robot components can be ensured via integrated CAN bus interface. In this way, a perfect in-process charging system can be provided.

In the following a charging process is briefly outlined. The charging is based on the principle of electrical induction. In the charging process, the receiver coil 22 can receive the magnetic field M provided by the transmitter coil 11. According to the principle of electrical induction receiving the magnetic field M may induce an electric signal in the receiver coil 22. Thus, the receiver coil 22 can transform the magnetic field M in a power transmission signal Vin. The power transmission signal Vin is an AC (alternating current) or time varying electric signal. In the context of this disclosure, signal means electric signal, in particular electric current and/or electric voltage. A voltage value for the power transmission signal Vin can be, for example, 400 V peak to peak, thus +/- 200 V. In this embodiment, a frequency of the power transmission signal Vin may be in the range of several ten to several hundred kilohertz. For example, the frequency may be between 20 to 150 kilohertz.

The receiver module 21 can transform the power transmission signal Vin into a charging or supply signal Vout for charging the battery 23. Since batteries 23 are operated with direct current, the supply signal Vout needs to be a direct current (DC) signal. In this exemplary embodiment, the battery 23 may be a 48 V battery. Thus, the supply signal Vout to charge the battery 23 may be an electrical signal with 48 V nominal or 60 V maximum. Of course, other battery designs such as a 12 V battery or a 60 V battery are possible as well.

Especially with increasing power demand, for example for fast charging, and the battery voltage usually fixed here for example, 48 V, the charging current needs to increase for higher power transmission. However, it is difficult or even impossible to build a receiver coil 22 for currents above 100 A. One solution is to have a receiver module 21 with multiple transformers between the receiver coil 22 and to use multiple transformer circuits T with transformers T1 to T4 between the receiver coil 22 and the battery 23. In this way, the voltage at the receiver coil 22 can be higher and the current lower.

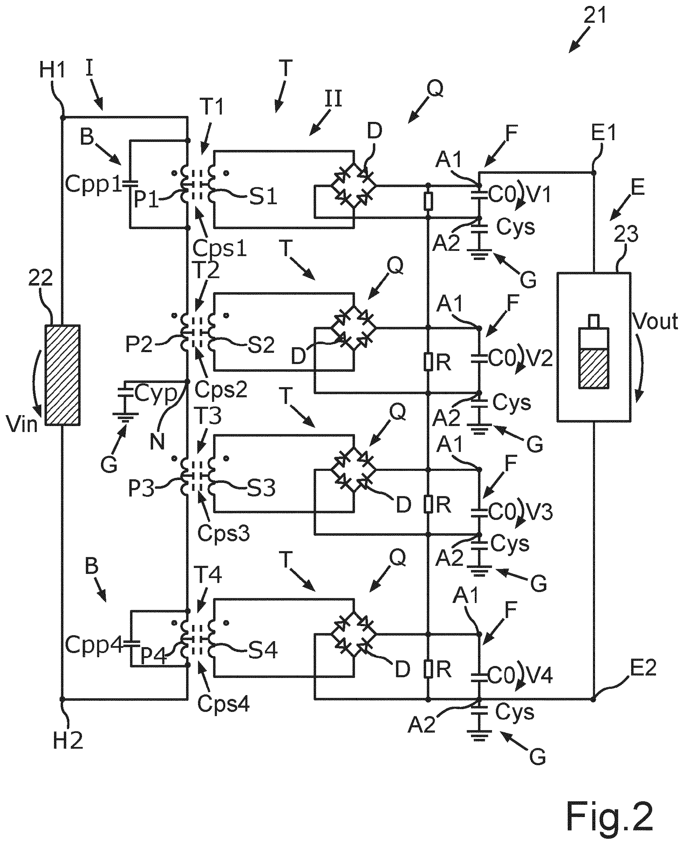

Fig. 2 shows an exemplary embodiment of an equivalent circuit of a receiver module 21, which is enabled for high power transmissions, for example in the range of several hundred or thousand Volt, here 400 V. The receiver module 21 comprises the receiver coil 22 which provides a first connection H1 and a second connection H2. The receiver module 21 also comprises at least three transformer circuits T of identical design. Fig. 2 shows an exemplary structure of the receiver module 21 with four transformer circuits T. Each of the transformer circuits T comprises an electrical transformer T1, T2, T3, T4, a receiver circuit Q and a filter circuit F. To keep the design of the transformers T1 to T4 small and leakage inductance low, the transformers T1 to T4 are configured as so-called planar transformers.

Each transformer T1 to T4 comprises a primary coil P1 to P4 and a secondary coil S1 to S4, which are galvanic isolated. The primary and secondary coil P1 to P4 and S1 to S4 of each transformer T1 to T4 may provide inductance in the range of several microhenry (μH). For example, the inductance may be between to 1 to 20 μH, preferably between 1 to 5 μH. By using frequencies for the power transmission signal in the kilohertz range, compared to transformers with inductances in the microhenry range, interfering resonances in the power transmission can be avoided.

By this design, the receiver module 21 is divided into two galvanic isolated sides. A primary side I is associated with the respective primary coil P1 to P4. A secondary side II is associated with the respective secondary coil S1 to S4. In this embodiment, the transformers T1 to T4 are configured in a step-down configuration. That means that each of the transformers T1 to T4 can convert or transform the power transmission signal Vin down, for example, to a voltage with a lower value.

Due to the planar design the transformers T1 to T4 as depicted in Fig. 2 have a high coupling or couple capacitance. In Fig. 2, the couple capacitances are depicted as a respective capacitor Cps1 to Cps4 between the primary coil P1 to P4 and the secondary coil S1 to S4 of each transformer T1 to T4. For the transformers T1 bis T4, the couple capacitance of the couple capacitor Cps1 to Cps4 may be in the range of several nanofarad (nF), in particular 10 to 20 nF, preferably 1 to 5 nF.

On the primary side I, the transformer T1 to T4 are connected in serial connection with each other. The serial connection of transformers T1 to T4 is connected to the first connection H1 on the one side and to the second connection H2 on the other side. Hereby, the transformer T1, which is the first of the transformers T1 to T4 in the serial connection, is directly connected to the first connection H1. The transformer T4, which is the last of the transformers T1 to T4 in the serial connection, is directly connected to the second connection H2.

In the serial connection of the transformers T1 to T4, a center tab N is provided. In this exemplary embodiment, the center tab N is an electrical connection between the second transformer T2, which is directly connected to transformer T1 in the serial connection, and the third transformer T3, which is directly connected to the transformer T4 in the serial connection. By means of the center tab N, the primary side I is coupled or connected to a predefined base potential of the receiver module 21. Here, the base potential can be provided by so-called chassis ground G. The coupling or connection can be realized by means of a primary side Y-capacitor Cyp. Cyp allows a voltage in the equivalent circuit in Fig. 2, which is symmetrical to ground G. This design provides advantages for electromagnetic compatibility of the depicted circuit.

On the secondary side II each of the transformer T1 to T4, in particular each of the secondary coils S1 to S4 are connected in parallel to the respective rectifier circuit Q. In this exemplary embodiment, each rectifier circuit Q is depicted as full-wave bridge rectifier using four diodes D. However, other rectifier designs are possible as well. The rectifier circuit Q is enabled to rectify the AC signal provided by the respective primary coil S1 to S4 into a DC signal. The output of each rectifier circuit Q is connected with a dummy load resistor R. In this example, the dummy load resistor R can provide a resistance of about 10 kilo Ohm.

The filter circuits F are connected in parallel to each of the respective dummy load resistors R. Each of the filter circuits F provides a filter capacitor C0. The respective filter capacitor C0 enables filtering or smoothing a signal provided by the respective rectifier circuit Q.

As depicted in Fig. 2, each of the filter circuits F provides an output terminal for the respective transformer circuit T. Hereby, the filter capacitance C0 is connected to a first output connection A1 of the output terminal on the one side and a second output connection A2 of the output terminal on the other side. The capacitance of the filter capacitors C0 can lie in the range of several ten microfarads.

In Fig. 2 the resulting signal after smoothing is depicted as output signal V1 to V4. The respective output signal V1 to V4 can be taped between the first output connection A1 and the second output connection A2 of each of the transformer circuits T.

To allow a stable voltage relative to the chassis on the secondary side II, each of the second output connections A2 is connected to a virtual ground. In this case, the virtual ground may also be the chassis ground G. The coupling or connection may be realized by means of a secondary Y-capacitor Cys. In the depicted embodiment, the capacitance of the Y-capacitors Cyp, Cys on the primary and secondary side can be in the range of several nF.

In the embodiment in Fig. 2, the transformer circuits T are connected in series on the secondary side II.

The serial connection provides a supply terminal E for connecting the battery 23. The supply terminal E comprises a first supply connection E1 and a second supply connection E2. The battery 23 is connected to the first supply connection E1 on the one side and to the second supply connection E2 on the other side. Since the transformer circuits are connected in series on the secondary side II, the voltage value of the supply signal Vout results from the sum of the voltage values of each of the output signals V1 to V4. Therefore, it is possible to address different battery voltage ranges.

In an alternative circuit design, the rectifier circuit Q outputs may be connected in parallel or there may be a combination of serial and parallel connection of the outputs. This guarantees even more flexibility in the provided voltage ranges. In an embodiment with four transformer circuits, as depicted in Fig. 2, the following voltage ranges may be provided depending on the connection on the secondary side II:

- all transformer circuits in serial connection: 60 V to 120 V (96 V nominal),
- all transformer circuits in parallel connection: 15 V to 30 V (24 V nominal), and
- two each in serial connection and the resulting two series circuits in parallel connection: 30 V to 60 V (48 V nominal).

However, a challenge can be to balance the module output signals V1 to V4, in particular the module output voltages, especially at high loads. For example, the power transmission signal Vin with 400 V or $\pm$ 200 V to chassis will result in a voltage of 100 V over each transformer T1 to T4 on the primary side I. However, the voltages across the coupling capacitors Cps1 to Cps4 will be different. In this example, in particular the transformers T1 and T4, will see a higher voltage across their coupling capacitor Cps1, Cps4, than the transformers T2 and T3. For example, the coupling capacitors Cps1, Cps4 will have about $\pm$ 150 V to ground, whereas the coupling capacitors Cps2, Cps3 may have $\pm$ 50 V to ground (considering losses). This means, different currents will flow through the transformer circuits T. This will create different output voltages, thus different output signals V1 to V4.

To enable balancing, the idea is to compensate the coupling capacitance of the transformers T1 to T4 of the primary side I by connecting capacitors across the transformer input T1 to T4. As depicted in Fig. 2 this idea is implemented by connecting bypass devices B in parallel to the primary coils P1, P4 of the first and fourth transformer T1, T4. The bypass devices B each comprise at least one bypass capacitor Cpp1, Cpp4. This results in a capacitive voltage divider with respect to the primary coils P1, P4 of the transformers T1, T4. As can be seen from Fig. 2 due to the serial connection of the transformer circuit T in the primary side I, the bypass capacitors Cpp1, Cpp4 are connected in series to the neighboring transformer circuit, here T2 and T3. In this way, the capacitors Cpp2 and Cpp4 are enabled to compensate different currents across the coupling capacitors Cps1 to Cps4. This results in a better intrinsic balancing in of the output signals V1 to V4.

The value of the each of the bypass capacitors Cpp1, Cpp4 may depend on the value of the corresponding coupling capacitor, here Cps1 and Cps4. If the coupling capacitance Cps1 to Cps4 is too small, then the compensation has little effect. Typical values for the bypass capacitors Cpp1, Cpp4 and the coupling capacitors Cps1 to Cps4 can lie in the range of several nF and in particular between 1 to 20 nF, preferably between 1 to 5 nF. In the design in Fig. 2 the capacitance may be 3 nF. However, larger values may be possible as well, as long as a predefined relationship in value between the capacitances is maintained.

To allow for an effective compensation when designing a receiver module 21 as exemplified in Fig. 2, the following relationship between the capacitances of the respective capacitors should be met:

$$Cyp, Cys << C0,$$

and

$$Cpp1, Cpp2 << Cyp, Cys$$

That means that the capacitance of the Y capacitors Cyp and Cys is preferably much smaller than the capacitance of the filter capacitors C0. In this exemplary embodiment, the difference can lie in the range of 4 to 5 orders of magnitude. In addition, the capacitance of the bypass capacitors Cpp1, Cpp4 is preferably much smaller than the capacitance of the Y capacitors Cyp, Cys. In this exemplary embodiment, the difference can lie in the range of one order of magnitude, for example, be a factor of 2 to 10.

Adding a capacitor across a transformer winding can be challenging as this creates extra switching losses or electromagnetic interferences. However, in wireless power transfers, as described in the previous embodiments, the power transmission is typically operated in a so-called resonant or soft switching mode. In this way, the charging and discharging of the inductances, here the receiver coil 22, is effectively lossless, so that switching losses and electromagnetic interferences are not a problem. A resonant or soft switching mode is a known technique for inductive power transmission. Using resonant or soft switching results in a current and voltage of the power transmission signal Vin with a phase shift of 180 degrees. In addition, the switching is provided such that there is no or little overlap between the current and the voltage portion in the signal.

Summarized, the embodiments show a method for balancing output voltages V1 to V4 in a system 1 for wireless inductive power transmission for battery charging of an autonomous transport vehicle. Voltage balancing with a system according to Fig. 1 and a receiver module 21 according to Fig. 2 and similar designs have been simulated and tested in a lab successfully.

## Claims

1. Receiver module (21) for wireless power transmission, comprising

   - a receiver coil (22) for generating an electric power transmission signal (Vin) from an alternating magnetic field (M), and
   - at least three transformer circuits (T) for receiving the power transmission signal (Vin) from the receiver coil (22) at a primary side (I) of the respective transformer circuit (T), and for transforming the power transmission signal (Vin) into a supply signal (Vout), and for providing the supply signal (Vout) at a secondary side (II) of the respective transformer circuit (T) for supplying a connectable energy storage device with electric energy, wherein

     ▪ on their respective primary side (I): the transformer circuits (T) are connected in serial connection, wherein in the serial connection a first of the transformer circuits (T1) is directly connected with a first connection (H1) of the receiver coil (22) and a last of the transformer circuits (T) is directly connected with a second connection (H2) of the receiver coil (22),
     ▪ on their respective secondary side (II): the transformer circuits (T) are each coupled with a first output connection (A1) and a second output connection (A2) for connecting the energy storage device, wherein the second output connection (A2) is coupled with a base potential of the receiver module,

   **characterized in that**
   - the receiver module (21) further comprises at least two bypass devices (B) each comprising at least one bypass capacitor (Cpp1, Cpp4), wherein on the primary side (I) the first and the last one of the transformer circuits (T1, T4) are each connected in parallel to one of the bypass devices (B), wherein a value of the capacitance of the respective bypass capacitor (Cpp1, Cpp4) is provided as a function of a couple capacitance (Cps1, Cps2, Cps3, Cps4) of the respective transformer circuit (T), in particular a transformer (T1, T2, T3, T4) of the respective transformer circuit (T).

**2.** Receiver module (21) according to claim 1, wherein the transformer circuits (T) are connected in serial connection on the secondary side (II).

**3.** Receiver module (21) according to any of the preceding claims, wherein the transformer circuits (T) are configured as rectifier circuits (Q), in particular as full-wave rectifier circuits.

**4.** Receiver module (21) according to any of the preceding claims, wherein the respective transformer circuit (T) comprising a planar transformer.

**5.** Receiver module (21) according to any of the preceding claims, wherein the receiver module (21) comprises five transformer circuits (T) connected in serial connection between the respective first and second connection (H1, H2) of the receiver coil (22) on the primary side (I), resulting in a center transformer circuit (T) in a middle position of the serial connection and four outer transformer circuits (T), wherein in the serial connection the four outer transformer circuits (T) each are connected in parallel with a respective bypass device (B).

**6.** Receiver module (21) according to claim 5, wherein a value of the capacitance of the respective bypass capacitor (Cpp1, Cpp4) is dependent on a position of the associated transformer circuit (T) in the serial connection relative to the first and second connection (H1, H2) of the receiver coil (22).

**7.** Receiver module (21) according to any of the preceding claims, wherein in the serial connection a center tap (N) between the transformer circuits (T) is provided, wherein the center tap (N) is coupled with the base potential of the receiver module (21).

**8.** Receiver module (21) according to any of the preceding claims, wherein the bypass capacitor (Cpp1, Cpp4) providing a capacitance in a range of 1 to 20 nanofarad, preferably 1 to 5 nanofarad.

**9.** Mobile device with a receiver module (21) according to any of the preceding claims, and an energy storage device, which is connected with the receiver module (21).

**Patentansprüche**

**1.** Empfängermodul (21) zur drahtlosen Leistungsübertragung, umfassend

- eine Empfängerspule (22) zum Erzeugen eines elektrischen Leistungsübertragungssignals (Vin) von einem magnetischen Wechselfeld (M), und

- mindestens drei Wandlerschaltungen (T) zum Empfangen des Leistungsübertragungssignals (Vin) von der Empfängerspule (22) an einer primären Seite (I) der jeweiligen Wandlerschaltung (T) und zum Wandeln des Leistungsübertragungssignals (Vin) in ein Versorgungssignal (Vout) und zum Bereitstellen des Versorgungssignals (Vout) an einer sekundären Seite (II) der jeweiligen Wandlerschaltung (T) zum Versorgen einer verbindbaren Energiespeichervorrichtung mit elektrischer Energie, wobei

 ▪ auf ihrer jeweiligen primären Seite (I): die Wandlerschaltungen (T) in Reihenschaltung verbunden sind, wobei in der Reihenschaltung eine erste der Wandlerschaltungen (T1) direkt mit einer ersten Verbindung (H1) der Empfängerspule (22) verbunden ist und eine letzte der Wandlerschaltungen (T) direkt mit einer zweiten Verbindung (H2) der Empfängerspule (22) verbunden ist,
 ▪ auf ihrer jeweiligen sekundären Seite (II): die Wandlerschaltungen (T) jeweils mit einer ersten Ausgangsverbindung (A1) und einer zweiten Ausgangsverbindung (A2) zum Verbinden der Energiespeichervorrichtung gekoppelt sind, wobei die zweite Ausgangsverbindung (A2) mit einem Basispotenzial des Empfängermoduls gekoppelt ist,

**dadurch gekennzeichnet, dass**

- das Empfängermodul (21) ferner mindestens zwei Bypassvorrichtungen (B) umfasst, wobei jede mindestens einen Bypasskondensator (Cpp1, Cpp4) umfasst, wobei auf der primären Seite (I) die erste und die letzte der Wandlerschaltungen (T1, T4) jeweils parallel mit einer der Bypassvorrichtungen (B) verbunden sind, wobei ein Wert der Kapazität des jeweiligen Bypasskondensators (Cpp1, Cpp4) als eine Funktion einer Koppelkapazität (Cps1, Cps2, Cps3, Cps4) der jeweiligen Wandlerschaltung (T), insbesondere eines Wandlers (T1, T2, T3, T4) der jeweiligen Wandlerschaltung (T) vorgesehen wird.

**2.** Empfängermodul (21) nach Anspruch 1, wobei die Wandlerschaltungen (T) in Reihenschaltung auf der sekundären Seite (II) verbunden sind.

**3.** Empfängermodul (21) nach einem der vorhergehenden Ansprüche, wobei die Wandlerschaltungen (T) als Gleichrichterschaltungen (Q), insbesondere als Vollwellengleichrichterschaltungen konfiguriert sind.

**4.** Empfängermodul (21) nach einem der vorhergehenden Ansprüche, wobei die jeweilige Wandlerschaltung (T) einen planaren Wandler umfasst.

5. Empfängermodul (21) nach einem der vorhergehenden Ansprüche, wobei das Empfängermodul (21) fünf Wandlerschaltungen (T) umfasst, die in Reihenschaltung zwischen der jeweiligen ersten und zweiten Verbindung (H1, H2) der Empfängerspule (22) auf der primären Seite (I) verbunden sind, was zu einer zentralen Wandlerschaltung (T) in einer mittleren Position der Reihenverbindung und vier äußeren Wandlerschaltungen (T) führt, wobei in der Reihenverbindung die vier äußeren Wandlerschaltungen (T) jeweils parallel mit einer jeweiligen Bypassvorrichtung (B) verbunden sind.

6. Empfängermodul (21) nach Anspruch 5, wobei ein Wert der Kapazität des jeweiligen Bypasskondensators (Cpp1, Cpp4) von einer Position der assoziierten Wandlerschaltung (T) in der Reihenverbindung in Bezug auf die erste und die zweite Verbindung (H1, H2) der Empfängerspule (22) abhängt.

7. Empfängermodul (21) nach einem der vorhergehenden Ansprüche, wobei in der Reihenverbindung eine zentrale Abzweigung (N) zwischen den Wandlerschaltungen (T) vorgesehen ist, wobei die zentrale Abzweigung (N) mit dem Basispotenzial des Empfängermoduls (21) gekoppelt ist.

8. Empfängermodul (21) nach einem der vorhergehenden Ansprüche, wobei der Bypasskondensator (Cpp1, Cpp4) eine Kapazität in einem Bereich von 1 bis 20 Nanofarad, vorzugsweise 1 bis 5 Nanofarad bereitstellt.

9. Tragbare Vorrichtung mit einem Empfängermodul (21) nach einem der vorhergehenden Ansprüche und einer Energiespeichervorrichtung, die mit dem Empfängermodul (21) verbunden ist.

## Revendications

1. Module récepteur (21) pour la transmission d'énergie sans fil, comprenant

    - une bobine réceptrice (22) destinée à générer un signal de transmission d'énergie électrique (Vin) à partir d'un champ magnétique alternatif (M), et
    - au moins trois circuits de transformateur (T) destinés à recevoir le signal de transmission d'énergie électrique (Vin) provenant de la bobine réceptrice (22) sur un côté primaire (I) du circuit de transformateur (T) respectif, à transformer le signal de transmission d'énergie (Vin) en un signal d'alimentation (Vout), et à fournir le signal d'alimentation (Vout) sur un côté secondaire (II) du circuit de transformateur (T) respectif afin d'alimenter un dispositif de stockage d'énergie raccordable en énergie électrique, dans lequel

    ■ sur leurs côtés primaires (I) respectifs : les circuits de transformateur (T) sont connectés en série, un premier des circuits de transformateur (T1) étant directement connecté à une première connexion (H1) de la bobine réceptrice (22) et un dernier des circuits de transformateur (T) étant directement connecté à une deuxième connexion (H2) de la bobine réceptrice (22),
    ■ sur leurs côtés secondaires respectifs (II) : les circuits de transformateur (T) sont chacun couplés à une première connexion de sortie (A1) et à une deuxième connexion de sortie (A2) destinées au raccordement du dispositif de stockage d'énergie, la deuxième connexion de sortie (A2) étant couplée à un potentiel de base du module récepteur,
    **caractérisé en ce que**

    - le module récepteur (21) comprend en outre au moins deux dispositifs de dérivation (B) comprenant chacun au moins un condensateur de dérivation (Cpp1, Cpp4), dans lequel, sur le côté primaire (I), le premier et le dernier des circuits de transformateur (T1, T4) sont chacun connectés en parallèle à l'un des dispositifs de dérivation (B), une valeur de capacité du condensateur de dérivation (Cpp1, Cpp4) respectif étant déterminée en fonction d'une capacité de couplage (Cps1, Cps2, Cps3, Cps4) du circuit de transformateur (T) respectif, en particulier d'un transformateur (T1, T2, T3, T4) du circuit de transformateur (T) respectif.

2. Module récepteur (21) selon la revendication 1, dans lequel les circuits de transformateur (T) sont connectés en série sur le côté secondaire (II).

3. Module récepteur (21) selon l'une des revendications précédentes, dans lequel les circuits de transformateur (T) sont configurés sous forme de circuits redresseurs (Q), en particulier de circuits redresseurs à double alternance.

4. Module récepteur (21) selon l'une des revendications précédentes, dans lequel chaque circuit de transformateur (T) comprend un transformateur plan.

5. Module récepteur (21) selon l'une des revendications précédentes, dans lequel le module récepteur (21) comprend cinq circuits de transformateur (T) connectés en série entre les première et deuxième connexions (H1, H2) respectives de la bobine réceptrice (22) du côté primaire (I), de manière à former un circuit de transformateur central (T) dans une position médiane de la connexion en série et quatre circuits de transformateur externes (T), dans la connexion en série, les quatre circuits de transformateur externes (T) étant chacun connectés en parallèle avec un dispositif de dérivation (B) respectif.

6. Module récepteur (21) selon la revendication 5, dans lequel une valeur de capacité du condensateur de dérivation (Cpp1, Cpp4) respectif dépend de la position du circuit de transformateur (T) associé dans la connexion en série par rapport aux première et deuxième connexions (H1, H2) de la bobine réceptrice (22).

7. Module récepteur (21) selon l'une des revendications précédentes, dans lequel une prise médiane (N) est prévue dans la connexion en série entre les circuits de transformateur (T), la prise médiane (N) étant couplée au potentiel de base du module récepteur (21).

8. Module récepteur (21) selon l'une des revendications précédentes, dans lequel le condensateur de dérivation (Cpp1, Cpp4) présente une capacité comprise entre 1 et 20 nanofarads, de préférence entre 1 et 5 nanofarads.

9. Dispositif mobile comprenant un module récepteur (21) selon l'une des revendications précédentes, et un dispositif de stockage d'énergie connecté au module récepteur (21).

EP 4 415 218 B1

Fig.1

Fig.2

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022097050 A1
- US 20100090649 A1
- CN 109687601 A